# EUROPEAN PATENT APPLICATION

(11) **EP 1 744 279 A1**
(43) Date of publication of application: **17.01.2007**
(21) Application number: 05291498.3
(22) Date of filing: 11.07.2005
(51) Int. Cl.: G06T 5/00, G06T 5/20, G06T 9/00

(54) **Method and device for filtering an image using side information**

(71) Applicant: Thomson Licensing, 92100 Boulogne-Billancourt (FR)
(72) Inventor: Le Meur, Olivier, 92648 Boulogne Cedex (FR); Thoreau, Dominique, 92648 Boulogne Cedex (FR); Kypreos, Jean, 92648 Boulogne Cedex (FR); Chevance, Christophe, 92648 Boulogne Cedex (FR)
(74) Representative: Benezeth, Philippe J.L. M.

(57) **Abstract**

The invention relates to a method for filtering a sequence of images, each image comprising pixels or group of pixels characterized by their perceptual relevancy value. It comprises a step for filtering said images with a filtering strength that depends for each pixel or group of pixels on said perceptual relevancy value.

## Description

### 1. Field of the invention

The invention concerns a method and a device for filtering an image or a sequence of images based on side information characterizing perceptual relevancy of pixels or groups of pixels within the image.

### 2. Background of the invention

The invention relates to image filtering for applications such as image compression, image enhancement or progressive transmission. Indeed, images are often filtered before being compressed and encoded in order to reduce the amount of information. The images are therefore encoded more efficiently since their spatial and temporal redundancies have been reduced thanks to this filtering step also known as pre-filtering step. State-of-art filtering methods are based on the fact that visual artefacts are less visible in textured regions than in uniform regions that is a well-known property of the human visual system. Therefore, the strength of the filter is increased on textured regions and decreased on uniform regions. The strength of the filter is characterized by some parameters of the filter. For example, in the case of a median filter, the strength of the filter is characterized by the size of its analysis window while in the case of a gaussian filter the strength of the filter is characterized by the variance of the filter. For a median filter, the larger the size of the analysis window, the stronger the filtering step. For a gaussian filter, the higher the variance of the filter, the stronger the filtering step. Nevertheless, these filtering methods are traditionally applied systematically on the whole image. When filters are applied systematically, the most relevant visual information, also called regions of interest, may be degraded and some annoying artifacts could appear thus decreasing the visual subjective quality.

### 3. Summary of the invention

The invention aims at improving filtering of images by taking into account perceptual relevancy of pixels or groups of pixels within the images.

The invention relates to a method for filtering a sequence of images, each image comprising pixels or group of pixels characterized by their perceptual relevancy value. The method comprises a step for filtering the images with a filtering strength that depends for each pixel or group of pixels on the perceptual relevancy value.
Advantageously the filtering strength for each pixel or group of pixels is inversely proportional to the perceptual relevancy value associated to the pixel or group of pixels.
Preferentially, perceptual relevancy values are saliency values.
Preferentially, the filtering step is a median filtering step on an analysis window and in that the filtering strength is proportional to the size of the analysis window.
Advantageously the filtering step is a gaussian filtering step and in that the filtering strength is proportional to the variance of the Gaussian filter.

The invention also relates to a method for coding a sequence of images that comprises the filtering method according to the invention whose filtering strength depends for each pixel or group of pixels also on a coding complexity of the images.
Preferentially, the coding complexity is computed based on horizontal and vertical gradients of the images.

The invention also relates to a device for filtering a sequence of images, each image comprising pixels or group of pixels, comprising means for characterizing perceptual relevancy value of the pixels or group of the pixels. It further comprises means for filtering the images with a filtering strength that depends for each pixel or group of pixels on the perceptual relevancy value.
Advantageously the means for filtering are a median filter or a gaussian filter.

The invention concerns a device for coding a sequence of images, each image comprising pixels or group of pixels, characterized in that it comprises coding means for encoding the images, means for characterizing perceptual relevancy value of the pixels or group of the pixels, means for filtering the images with a filtering strength that depends for each pixel or group of pixels on the perceptual relevancy value, means for evaluating an encoding complexity value of the images and means to send back the encoding complexity value to the filtering means.

### 4. Drawings

Other features and advantages of the invention will appear with the following description of some of its embodiments, this description being made in connection with the drawings in which:
- Figure 1 depicts the general flowchart of the method according to the invention;
- Figure 2 depicts a flowchart according to an exemplary embodiment;
- Figure 3 depicts a filtering device according to the invention; and
- Figure 4 depicts an encoding device according to the invention.

### 5. Detailed description of the invention

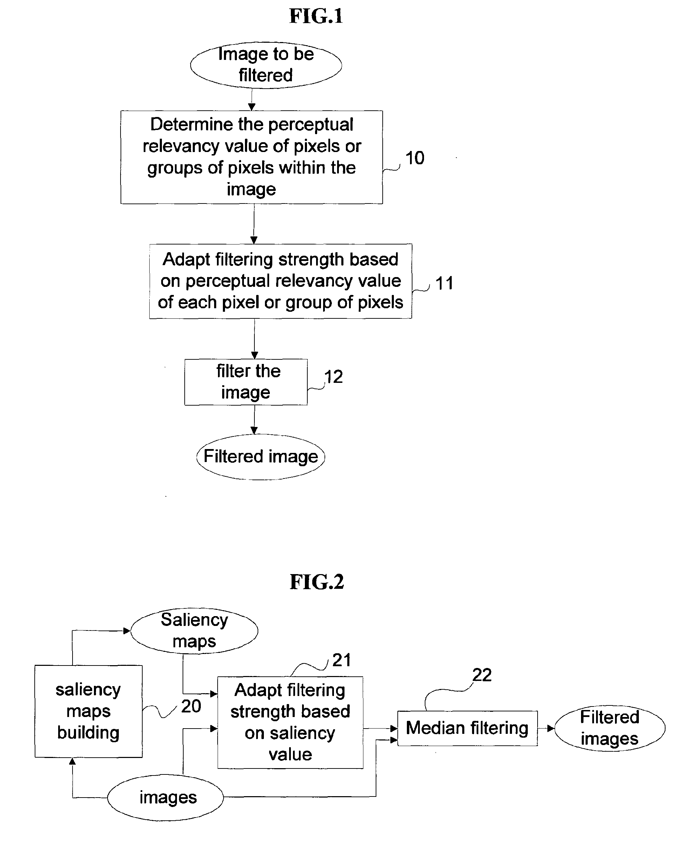

The invention relates to a method depicted on figures 1 and 2. The invention consists in taking into account side information when filtering an image comprising pixels or image points. More precisely, side information characterizing the perceptual relevancy of either pixels or groups of pixels within the image to be filtered is used to derive the filtering strength. The regions of high perceptual relevancy are also called regions of interest.

In reference to figures 1 and 2, a first step 10 consists in determining for each pixels or groups of pixels in an image a perceptual relevancy value. Advantageously, the perceptual relevancy value associated to each pixel or group of pixels in an image is a saliency value. Thus a saliency map 20 is associated to this image. A saliency map s is a two dimensional topographic representation of conspicuity of the image. This map is normalized for example between 0 and 255. The saliency map is thus providing a saliency value s(x,y) per pixel (where (x,y) denotes the pixel coordinates) that characterizes its perceptual relevancy. The higher the s(x,y) value is, the more relevant the pixel of coordinates (x,y) is. For some applications such as image compression and coding, it may be interesting to get a single saliency value per macroblock (e.g. block of 16 per 16 pixels). To obtain this single value, the saliency values over the entire macroblock or group of pixels may be averaged. The median value over the entire macroblock or group of pixels may also be used instead of the average value. For other applications such as image enhancement, a saliency value per pixel may be used. A saliency map for a given image may be obtained with a method comprising the following steps :
- projection of the image according to the luminance component if the image is a single color image and according to the luminance component and to the chrominance components if the image is a color image;
- perceptual sub-bands decomposition of these components in the frequency domain according to a visibility threshold of a human eye. The sub-bands are obtained by carving up the frequency domain both in spatial radial frequency and orientation. Each resulting sub-band may be regarded as the neural image corresponding to a population of visual cells tuned to a range of spatial frequency and a particular orientation;
- extraction of salient elements of the sub-bands related to the luminance component, i.e. the main important information from the sub-band;
- contour enhancement of the salient elements in each sub-band related to the luminance component;
- calculation of a saliency map from the contour enhancement, for each sub-band related to the luminance component;
- creation of the saliency map as a function of the saliency maps obtained for each sub-band.

This method is further described in the article by O. Le Meur et al. entitled "From low level perception to high level perception, a coherent approach for visual attention modeling" and published in the proceedings of SPIE Human Vision and Electronic Imaging IX (HVEI'04), San Jose, CA, (B. Rogowitz, T. N. Pappas Ed.), Janvier 2004.

The following step 11 (also referred as 21 on figure 2) consists in adapting locally the filtering strength of the filter depending on this side information by modifying filter's coefficients. More precisely, the strength is increased locally for a region of low perceptual relevancy and is decreased locally for a region of high perceptual relevancy, i.e. for a region of interest. Indeed a region of interest will be less filtered than a region with less perceptual relevancy. According to a particular embodiment, the filter is deactivated on regions of interest and activated on regions of non interest based on the saliency map. For example, if the saliency value for a given pixel or group of pixels is higher than a predefined threshold then the filter is deactivated otherwise it is activated for this specific pixel or group of pixels. If the perceptual relevancy values are normalized to lie in the range [0;255], then a threshold of 128 may be used.

According to a preferred exemplary embodiment, the filter is driven by a cursor whose position characterizes its filtering strength. More precisely each cursor position corresponds with a set of filter's coefficients. Table 1 gives an example for ten cursor positions of such sets. for a Gaussian filter of length 7. The filter is defined as follows by 4 coefficients: (X3, X2, X1, X0, X1, X2, X3). Cursor position one corresponds to the filter deactivation or the lowest filtering strength and position ten corresponds to the highest filtering strength. The cursor position is generally selected by an operator depending on the targeted application. For example, in the compression domain for low bit-rate applications (e.g. wireless video streaming) the filtering strength has to be increased. Therefore a higher cursor position than for high bit-rate applications has to be selected.

**Table 1**

| Cursor position | X₃ | X₂ | X₁ | X₀ |
|---|---|---|---|---|
| 1 | 0 | 0 | 0 | 1024 |
| 2 | 15 | -31 | 48 | 960 |
| 3 | 25 | -57 | 94 | 900 |
| 4 | 27 | -76 | 138 | 846 |
| 5 | 19 | -84 | 179 | 796 |
| 6 | 6 | -79 | 214 | 742 |
| 7 | -11 | -61 | 241 | 686 |
| 8 | -24 | -33 | 258 | 622 |
| 9 | -29 | 0 | 264 | 554 |
| 10 | -24 | 33 | 260 | 486 |

The invention consists in modifying for each cursor position the filter's coefficients depending on side information, e.g. saliency values. For example, if saliency values are within the range [0;255], four classes may be defined by dividing the range [0;255] into four sub-ranges (e.g. class 0: [0;64], class 1: ]64;128], class 2: ]128;191], class 3: ]191;255]). Thus a saliency class is associated to each pixel or group of pixels depending on its saliency value. Let class 0 corresponds to the lowest saliency values and class 3 corresponds to the highest values. The filter's coefficients from table 1 are thus modified depending on the saliency classes according to table 2.

**Table 2**

| Saliency class | Cursor position | X₃ | X₂ | X₁ | X₀ |
|---|---|---|---|---|---|
| 0 | 1 | 6 | -79 | 214 | 742 |
| 0 | 2 | -11 | -61 | 241 | 686 |
| 0 | 3 | -24 | -33 | 258 | 622 |
| 0 | 4 | -29 | 0 | 264 | 554 |
| 0 | 5 | -24 | 33 | 260 | 486 |
| 0 | 6 | -11 | 63 | 249 | 422 |
| 0 | 7 | 6 | 87 | 234 | 370 |
| 0 | 8 | 25 | 104 | 220 | 326 |
| 0 | 9 | 44 | 113 | 206 | 298 |
| 0 | 10 | 57 | 117 | 192 | 292 |
| 1 | 1 | 19 | -84 | 179 | 796 |
| 1 | 2 | 6 | -79 | 214 | 742 |
| 1 | 3 | -11 | -61 | 241 | 686 |
| 1 | 4 | -24 | -33 | 258 | 622 |
| 1 | 5 | -29 | 0 | 264 | 554 |
| 1 | 6 | -24 | 33 | 260 | 486 |
| 1 | 7 | -11 | 63 | 249 | 422 |
| 1 | 8 | 6 | 87 | 234 | 370 |
| 1 | 9 | 25 | 104 | 220 | 326 |
| 1 | 10 | 44 | 113 | 206 | 298 |
| 2 | 1 | 27 | -76 | 138 | 846 |
| 2 | 2 | 19 | -84 | 179 | 796 |
| 2 | 3 | 6 | -79 | 214 | 742 |
| 2 | 4 | -11 | -61 | 241 | 686 |
| 2 | 5 | -24 | -33 | 258 | 622 |
| 2 | 6 | -29 | 0 | 264 | 554 |
| 2 | 7 | -24 | 33 | 260 | 486 |
| 2 | 8 | -11 | 63 | 249 | 422 |
| 2 | 9 | 6 | 87 | 234 | 370 |
| 2 | 10 | 25 | 104 | 220 | 326 |
| 3 | 1 | 0 | 0 | 0 | 1024 |
| 3 | 2 | 15 | -31 | 48 | 960 |
| 3 | 3 | 25 | -57 | 94 | 900 |
| 3 | 4 | 27 | -76 | 138 | 846 |
| 3 | 5 | 19 | -84 | 179 | 796 |
| 3 | 6 | 6 | -79 | 214 | 742 |
| 3 | 7 | -11 | -61 | 241 | 686 |
| 3 | 8 | -24 | -33 | 258 | 622 |
| 3 | 9 | -29 | 0 | 264 | 554 |
| 3 | 10 | -24 | 33 | 260 | 486 |

For a given cursor position filter's coefficients are modified depending on the saliency class associated to the pixel or group of pixels to be filtered. For example, if the operator has selected a cursor position equals to 3 and if the saliency class associated to the pixel or group of pixels to be filtered is class 3 then the Gaussian filter used is (25, -57, 94, 900, 94, -57, 25). If the saliency class associated to the pixel or group of pixels to be filtered is class 0 then the Gaussian filter used is (-24, -33, 258, 622, 258, -33, -24). More generally, for a given cursor position, the filter's coefficients are modified for a Gaussian filter such that the variance of the filter is increased when the saliency value is increased. For the application of image coding, the filter's coefficients may be changed for each macroblock if a saliency value per macroblock is used. For other applications they may be changed for each pixel but may also be changed for each group of pixels if required.

At step 12, the image is filtered locally with cursor position as selected for example by the operator and the filter's coefficients modified locally according to table 2. A median filtering step 22 can be applied instead of the Gaussian filtering step. Therefore, the signal definition is strongly reduced in regions with low perceptual relevancy by stronger filtering on these regions while preserving regions of interest even if they are textured regions.

Advantageously, when filtering is used as a pre-filtering step within a video encoding scheme, additional side information can be used to modify the filter's coefficients, for example information on coding complexity of current image. Indeed, in spite of the adaptive filtering step described above, the video sequence may still remain too complex to be able to be encoded at a given bit rate. In this case it is necessary to increase the filtering strength in order to meet the application requirements, especially the assigned bit rate. Thus if the video sequence is too complex, the encoder sends back information to the pre-filter about the high level of coding complexity and the strength of the filter is increased accordingly by modifying filter's coefficients. The coding complexity information may be represented by the following values:
- a rate of block artifact after coding/decoding the image. This measurement requires the coding and the decoding of the images.
- the amount of spatial information, computed via horizontal, vertical gradient, could be a good estimation of the coding complexity.

This coding complexity value is normalized to be in the range 0-N (e.g. N=255) and is subtracted to each perceptual relevancy value (e.g. saliency value). The perceptual relevancy value of a pixel or a group of pixels in the image is thus decreased and therefore a stronger filtering step is applied. This stronger filtering step leads to a greater reduction of the entropy of the image which can be encoded with fewer bits.

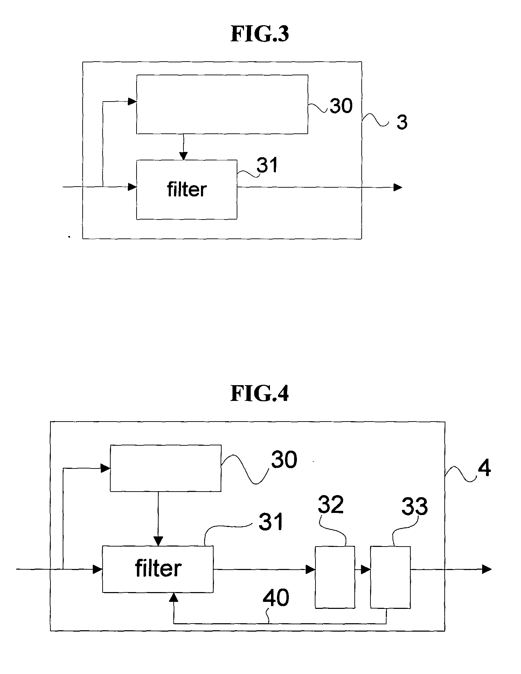

The invention also concerns a filtering device 3 depicted on figure 3. The device comprises a module 30 for characterizing the perceptual relevancy of pixels or groups of pixels within an image. It further comprises a filtering module 31 to filter the image locally depending on the perceptual relevancy of its pixels or groups of pixels.

The invention relates also to an encoding device 4 depicted on figure 4 for encoding a sequence of images. The similar elements are referenced with the same numbers on both figures 3 and 4. The device 4 comprises an encoding module 32 for encoding the images, a module 30 for characterizing the perceptual relevancy of pixels or groups of pixels within the images and a filtering module 31 to filter the images locally depending on the perceptual relevancy of their pixels or groups of pixels. Advantageously, the encoding module 32 is a video encoder that is compatible with MPEG AVC (known also as H.264 standard) standard described in the document ISO/IEC 14496-10 entitled « Information technology -- Coding of audio-visual objects -- Part 10: Advanced Video Coding ». Preferentially, the encoding device 4 comprises a module 33 that is able to evaluate a coding complexity value for each of the encoded images. The module 33 sends back information through link 34 to the filtering module 31 about the coding complexity of the current image in order to adapt the filtering strength according to this information.

Obviously, the invention is not limited to the embodiments described above. More precisely, the invention described in the context of image compression can be generalized to any kind of image process requiring a filtering step of images. Besides, the invention can be generalized to any type of filter. Furthermore, information other than saliency map can be used as side information provided it characterizes the perceptual relevancy of pixels or groups of pixels.

## Claims

1. Method for filtering a sequence of images, each image comprising pixels or group of pixels **characterized by** their perceptual relevancy value, **characterized in that** it comprises a step for filtering said images with a filtering strength that depends for each pixel or group of pixels on said perceptual relevancy value.

2. Method according to claim 1 **characterized in that** said filtering strength for said each pixel or group of pixels is inversely proportional to said perceptual relevancy value of said pixel or group of pixels.

3. Method according to any of claims 1 or 2 **characterized in that** said perceptual relevancy values are saliency values.

4. Method according to any of claim 1 to 3, **characterized in that** said filtering step is a median filtering step on an analysis window and **in that** the filtering strength is proportional to the size of said analysis window.

5. Method according to any of claim 1 to 3 **characterized in that** said filtering step is a gaussian filtering step and **in that** the filtering strength is proportional to the variance of said Gaussian filter.

6. Method for coding a sequence of images **characterized in that** it comprises said filtering method according to any of claims 1 to 5 and **in that** the filtering strength depends for each pixel or group of pixels also on a coding complexity of said images.

7. Method according to claim 6 **characterized in that** said coding complexity is computed based on horizontal and vertical gradients of said images.

8. Device (3) for filtering a sequence of images, each image comprising pixels or group of pixels, comprising means (30) for characterizing perceptual relevancy value of said pixels or group of said pixels **characterized in that** it further comprises means (31) for filtering said images with a filtering strength that depends for each pixel or group of pixels on said perceptual relevancy value.

9. Device according to claim 8, **characterized in that** said means for filtering are a median filter or a gaussian filter.

10. Device (4) for coding a sequence of images, each image comprising pixels or groups of pixels, **characterized in that** it comprises coding means (32) for encoding said images, means (30) for characterizing perceptual relevancy value of said pixels or groups of said pixels, means (31) for filtering said images with a filtering strength that depends for each pixel or group of pixels on said perceptual relevancy value, means (33) for evaluating an encoding complexity value of said images and means (34) to send back said encoding complexity value to said filtering means (31).
